# EUROPÄISCHE PATENTSCHRIFT

(11) **EP 2 920 232 B1**
(45) Veröffentlichungstag und Bekanntmachung des Hinweises auf die Patenterteilung: **04.01.2017**
(21) Anmeldenummer: 13814030.6
(22) Anmeldetag: 14.11.2013
(51) Int. Cl.: C08J 7/04, C08J 7/14, C08J 7/16, B32B 27/36, B32B 27/06, B44C 5/04, B32B 38/00

(54) **OBERFLÄCHENMATERIAL ZUR BESCHICHTUNG VON MELAMINHARZLAMINATEN**
SURFACE MATERIAL FOR COATING MELAMINE RESIN LAMINATES
MATIÈRE DE SURFACE POUR LE REVÊTEMENT DE STRATIFIÉS EN RÉSINE DE MÉLAMINE

(30) Priorität: 15.11.2012 DE 102012022464; 12.02.2013 DE 102013002457; 28.06.2013 WO PCT/EP2013/001908
(43) Veröffentlichungstag der Anmeldung: 23.09.2015
(73) Patentinhaber: Surteco Decor GmbH, 89150 Laichingen (DE)
(72) Erfinder: HALLER, Heinz, 73207 Plochingen (DE); SCHWEIZER, Guido, 89188 Merklingen (DE)
(74) Vertreter: Müller-Boré & Partner Patentanwälte PartG mbB
(86) Internationale Anmeldenummer: PCT/EP2013/003437
(87) Internationale Veröffentlichungsnummer: WO 2014/075804

(56) Entgegenhaltungen:
- DE-A1-102004 058 281
- DE-U1-202011 050 027
- GB-A- 1 399 624
- IT-A1- UD20 100 004

## Beschreibung

Die vorliegende Erfindung betrifft die Verwendung eines Oberflächenmaterials zur Beschichtung von Melaminharzlaminaten sowie ein Laminat, umfassend das erfindungsgemäß verwendete Oberflächenmaterial, und ein Verfahren zur Herstellung des Laminats.

Aus dem Stand der Technik sind dekorative Laminate bekannt, die häufig beispielsweise zur Herstellung von Laminatfußböden oder als Oberflächenmaterial für Wände, Decken oder Möbelstücke wie Schränke, Kommoden oder ähnliches verwendet werden können. Derartige dekorative Laminate bestehen üblicherweise aus einem Substrat, einem Dekorpapier/-film, einem darauf aufgebrachten Oberflächenmaterial (Overlay) und gegebenenfalls weiteren funktionellen Schichten. Das Oberflächenmaterial soll dabei das Laminat, insbesondere den Dekorfilm, vor Abrieb schützen. Die im Stand der Technik bekannten Oberflächenmaterialien weisen jedoch häufig den Nachteil auf, dass die Oberflächen aus duroplastischen Harzen, wie Melaminformaldehydharzen oder Phenolformaldehydharzen bestehen, die teilweise eine eingeschränkte Chemikalienbeständigkeit aufweisen, und die durch ihre Haptik nachteilig und in der Anwendung als Fußbodenmaterial durch hohen Gehschall negativ belegt sind.

DE 20 2011 050027 U1 beschreibt ein Fußbodenelement, welches eine Trägerplatte mit einer oberseitigen, mehrlagigen Nutzbeschichtung aufweist, wobei die Nutzbeschichtung eine Dämpfungsschicht, eine Dekorschicht sowie eine Verschleißschicht umfaßt, wobei die Verschleißschicht aus einem thermoplastischen Kunststoff auf Basis von beispielsweise Polyethylenterephthalat besteht, welche wiederum mit einem Lack beschichtet sein kann. IT UD 20 100 004 A1 beschreibt ein Verfahren zur Herstellung eines Laminats für eine glänzende Dekorbeschichtung, wobei diese Dekorbeschichtung eine Außenschicht auf Basis einer PET-Folie aufweisen kann, welche an der unteren Oberfläche geätzt ist, wobei als Substrat ein Melaminharz-enthaltendes duroplastisches Substrat eingesetzt wird. DE 10 2004 058281 A1 beschreibt Haftklebebänder, wobei als Folienträger bevorzugt PET-Folien eingesetzt werden, welche zur Verbesserung der Verankerung der Lackschichten geätzt sein können, beispielsweise mit Trichloressigsäure oder Trifluoressigsäure.

Der vorliegenden Erfindung liegt daher die Aufgabe zugrunde, ein flexibles, polymeres Oberflächenmaterial zur Beschichtung von Melaminharzlaminaten, das sich durch hohe Kratzfestigkeit und hervorragende Chemikalienbeständigkeit auszeichnet und eine gute Haftung (Adhäsion) auf dem nach entsprechender Laminierung resultierenden duroplastischen Substrat aufweisen soll, bereitzustellen.

Diese Aufgabe wird durch die in den Ansprüchen gekennzeichneten Ausführungsformen der vorliegenden Erfindung gelöst.

Insbesondere wird erfindungsgemäß die Verwendung eines Oberflächenmaterials, umfassend eine Polyethylenterephthalat-Folie, deren beide Oberflächen mit Trichloressigsäure geätzt worden sind, wobei bei der Ätzung zusätzlich gefällte Kieselsäure (SiOₓ) verwendet worden ist, und wobei eine der angeätzten Oberflächen der Polyethylenterephthalat-Folie mit einem Lack versehen ist, und wobei das Oberflächenmaterial auf der Oberfläche, die nicht mit einem Lack versehen ist, mit einer Siegelschicht versehen ist, wobei diese Siegelschicht auf der Basis von Melaminharz in Kombination mit kolloidaler Kieselsäure ist, zur Beschichtung von Melaminharzlaminaten, insbesondere als Lamininierungs-Haftvermittler innerhalb solcher duroplastischer Melaminsubstrate, bereitgestellt.

Vorzugsweise ist die Polyethylenterephthalat-Folie biaxial gereckt. Die Dicke der Polyethylenterephthalat-Folie unterliegt erfindungsgemäß keiner Einschränkung. Bevorzugt liegt die Dicke in einem Bereich von 12 µm bis 100 µm, besonders bevorzugt von 36 µm bis 50 µm.

Erfindungsgemäß sind beide Oberflächen der Polyethylenterephthalat-Folie durch Behandlung mit Trichloressigsäure angeätzt. Gemäß der vorliegenden Erfindung wird bei der Ätzung mit Trichloressigsäure zusätzlich gefällte Kieselsäure (SiOₓ) verwendet, welche dann in die Oberfläche eingebaut wird, die Oberfläche aufrauht und eine poröse Schicht darstellt. Hierfür wird zunächst eine wässrige Suspension von gefällter Kieselsäure (SiOₓ) aufgebracht, und dann die Folie mit Trichloressigsäure beidseitig benetzt. Im Anschluß erfolgt ein Abstreichen der überschüssigen Trichloressigsäure mit einem Drahtrakel und Luftbürste. Während die Trichloressigsäure verdampft, verbleibt auf der Folie beidseitig SiOₓ mit einer Belegung im Bereich von 1g/m² und darunter.

Derartige Folien sind beispielsweise aus EP 1 270 698 B1 im Rahmen der Herstellung doppelseitiger Klebebänder oder aus WO 2005/111606 A2 bekannt.

Als Folge dieser beidseitigen Oberflächenbehandlung der Polyethylenterephthalat-Folie wird auch die Oberflächenspannung vorteilhafterweise auf bis zu 65 dyn/cm erhöht, z.B. messbar mit handelsüblichen Testtinten oder Teststiften.

Zudem ist erfindungsgemäß eine der behandelten Oberflächen der Polyethylenterephthalat-Folie mit einem Lack versehen. Durch die Oberflächenbehandlung der Polyethylenterephthalat-Folie haften Lacke vorteilhafterweise sehr gut auf der Oberfläche einer solchen Folie. Insbesondere wässrige Lackdispersionen und hochvernetzende, strahlenhärtbare Lacke, deren Haftung auf PET-Folien schwierig ist, zeigen eine hervorragende Adhäsion. Gemäß einer bevorzugten Ausführungsform der vorliegenden Erfindung ist der Lack ein strahlenhärtbarer Lack. Gemäß einer weiteren bevorzugten Ausführungsform ist der Lack auf Basis eines Vollacrylats, eines Urethanacrylats, eines Epoxyacrylats, eines Polyesteracrylats oder eines Polyetheracrylats. Durch die Strahlenvernetzung des Lacks wird vorteilhafterweise eine hervorragende Kratzfestigkeit des Oberflächenmaterials erzielt.

Gemäß einer weiteren Ausführungsform umfasst der Lack weiter antibakterielle, antistatische und/oder photokatalytische Additive. Beispielsweise kann durch Zugabe von ca. 1% eines antibakteriellen Additivs eine antibakterielle Eigenschaft der lackierten Oberfläche erzielt werden. Erfindungsgemäß kann auch eine photokatalytische Schicht auf den Lack aufgedruckt sein, wobei die Druckfarbe vorzugsweise von 7 bis 15 Gew.-%, vorzugsweise 10 Gew.-% nanoskalige TiO₂-Pigmente enthält.

Gemäß der vorliegenden Erfindung ist das Oberflächenmaterial auf der Oberfläche, die nicht mit einem Lack versehen ist, mit einer Siegelschicht versehen, wobei diese Siegelschicht auf der Basis von Melaminharz in Kombination mit kolloidaler Kieselsäure ist. Üblicherweise werden hierfür 100 Gew.-Teile flüssiges Melaminharz mit 10 bis 100 Gew.-Teilen, vorzugsweise 20-50 Gew.-Teile, kolloidaler Kieselsäure, z.B. erhältlich von Fa. Grace, gemischt. In einer besonders bevorzugten Ausführungsform hiervon kann zusätzlich zur kolloidalen Kieselsäure auch noch gefällte Kieselsäure in Korngrößen im Bereich von 5 bis 10 µm zugegeben werden, und zwar üblicherweise in einer Konzentration von 2 bis 10 Gew.-Teilen. Zur Beschichtung werden 30 bis 50 Gew.%-ige klare Lösungen einer solchen Siegelschichtzusammensetzung eingesetzt. Zur Bildung einer solchen Siegelschicht werden diese dann getrocknet. Das Vorsehen einer solchen Siegelschicht auf der Basis von Melaminharz in Kombination mit kolloidaler Kieselsäure und gegebenenfalls gefällter Kieselsäure liefert eine weitere Verbesserung der Haftung infolge gesteigerter Affinität zu duroplastischen Substraten, insbesondere Melaminharzen. In einer besonders bevorzugten Ausführungsform kann vor dem Aufbringen der Siegelschicht eine Plasma- oder Koronabehandlung der Polyethylenterephthalat-Folie durchgeführt werden.

Gemäß einer weiteren Ausführungsform der vorliegenden Erfindung kann das Oberflächenmaterial auf der Oberfläche, die nicht mit einem Lack versehen ist, mit einem Konterdruck versehen sein. Durch einen derartigen dekorativen Konterdruck kann vorteilhafterweise bei der Herstellung eines dekorativen Laminats, welches das erfindungsgemäß verwendete Oberflächenmaterial umfasst, auf einen zusätzlichen bedruckten Dekorfilm bzw. ein zusätzliches bedrucktes Dekorpapier zur dekorativen Gestaltung des Laminats verzichtet werden.

Des Weiteren stellt die vorliegende Erfindung ein Laminat bereit, umfassend ein duroplastisches Substrat und ein darauf laminiertes, erfindungsgemäß verwendetes Oberflächenmaterial. Im erfindungsgemäßen Laminat ist dabei die lackierte Oberfläche der Polyethylenterephthalat-Folie auf der gegenüberliegenden Seite des Substrats, wohingegen die unlackierte, gegebenenfalls mit einer Siegelschicht versehene Oberfläche in Richtung Substrat weist.

Gemäß einer bevorzugten Ausführungsform der vorliegenden Erfindung ist das duroplastische Substrat ein Melaminfilm (mit Melaminformaldehydharz imprägniertes Dekorpapier), ein Phenolfilm (phenolharzgetränktes Papier), eine mit einem duroplastischen Harz beschichtete Platte, ein Vorimprägnat, ein Dekorpapier mit einem darüberliegenden Overlay, oder ein Duo-Foil mit einem darüberliegenden Overlay.

Im Rahmen der vorliegenden Erfindung wird unter einem (dekorativen) Melaminfilm, auch Dekorfilm genannt, ein hochgefülltes, opakes, unifarbenes oder bedrucktes Papier verstanden, das üblicherweise zwischen 50 und 110 g/m² schwer ist und das mit einem Anteil an Melaminformaldehydharz von ungefähr 110% bis 150% des Papiergewichts imprägniert ist.

Des Weiteren versteht man unter Phenolfilmen gebleichte oder ungebleichte Kraftpapiere, vorzugsweise in den Grammaturen von 100 g/m² bis 200 g/m², die mit Phenolformaldehydharzen getränkt sind, wobei der Harzanteil vorzugsweise 50% bis 100% des Papiergewichts beträgt.

Unter einem Vorimprägnat versteht man ein Dekorpapier, das bei der Herstellung in der Papiermaschine schon mit einer acrylatischen und/oder duroplastischen Harzdispersion imprägniert und anschließend geglättet wird. Die Papiere können unifarben oder bedruckt eingesetzt werden und haben vorzugsweise ein Gewicht von 50 bis 120 g/m², besonders bevorzugt von 50 bis 60 g/m².

Gemäß einer bevorzugten Ausführungsform ist das duroplastische Substrat ein Dekorpapier mit einem darüberliegenden Overlay, wobei das Dekorpapier nicht mit einer Harzdispersion vorimprägniert ist. Derartige Dekorpapiere, die vorzugsweise ein Gewicht von 30 bis 70 g/m² aufweisen, lassen sich hervorragend im Dekortiefdruckverfahren bedrucken, insbesondere besser als dies bei Vorimprägnaten möglich ist, und zeichnen sich so durch Ihre vorteilhaft hohe Druckqualität aus. Aus der Laminatboden- und Möbelindustrie ist ein großer Fundus an Dekorpapieren bekannt, mit denen sich dünne Laminate mit hervorragender Flexibilität (Dicke > 150 µm) herstellen lassen. Derartige Laminate sind trotz hoher Abriebfestigkeit ummantelungsfähig, wobei ein Uinmantelungsradius bis zu 1 mm möglich ist. Gemäß dieser Ausführungsform der vorliegenden Erfindung ist das Dekorpapier nicht vorimprägniert, sondern im Verfahren zur Herstellung des Laminats wird der Harzüberschuss des Overlays zur Imprägnierung des Dekorpapiers genutzt.

Unter Duo-Foil versteht man ein bedrucktes oder unbedrucktes, dekoratives, spaltfestes Papier, das auf seiner Rückseite so ausgestattet ist, dass es für einen Heißsiegelprozess geeignet ist. Das Papiergewicht beträgt vorzugsweise 50 bis 60 g/m², wobei die Siegelschicht vorzugsweise aus einem nach der Aushärtung duroplastischen Material besteht und vorzugsweise in einer Menge von 5 bis 30 g/m², besonders bevorzugt 10 bis 15 g/m², aufgebracht wird. Ein Duo-Foil ist beispielsweise in EP 2 223 800 A1 beschrieben.

Unter einem Overlay versteht man im Rahmen der vorliegenden Erfindung ein unbedrucktes, ungefülltes Papiervlies, das mit einem duroplastischen Harz getränkt ist und nach der Aushärtung bei Drücken von größer 20 bar und Temperaturen zwischen 140 °C und 190 °C transparent wird. Die bei der Imprägnierung verwendeten Harze können korundfrei (einfacher Schutz zum Beispiel für Möbel) sein oder auch Korundkörner enthalten (besonders abriebfest, zum Beispiel für Fußböden), deren mittlere Korngröße bevorzugt 30 µm bis 100 µm, bevorzugt 60 bis 80 µm beträgt. Der Korundanteil ist abhängig von der jeweils gewünschten Abriebklasse nach DIN EN 13389 und beträgt bei AC2 ca. 12 g/m², bei AC3 ca. 17 g/m², bei AC4 ca. 25 g/m² und bei AC5 ca. 40 g/m².

Gemäß der vorliegenden Erfindung sind die im Substrat enthaltenen Harze, wie in der Praxis üblich, vor der Verpressung mit dem erfindungsgemäß verwendeten Oberflächenmaterial und gegebenenfalls weiteren funktionellen Schichten noch nicht ausgehärtet und können deshalb unter einem Druck von 20 bar bis 100 bar und einer Temperatur von 140 °C bis 190 °C fließen. Unter dem Begriff "fließen" wird erfindungsgemäß verstanden, dass das Harz unter den o.g. Bedingungen zunächst erweicht und in Poren eindringen und Oberflächenstrukturen adaptieren kann, bevor die Aushärtung zum Duroplast einsetzt. Dies ist nötig, damit das erfindungsgemäß verwendete Oberflächenmaterial auf das duroplastische, aktivierbare Substrat laminiert werden kann.

Gemäß einer Ausführungsform der vorliegenden Erfindung umfasst das Laminat weiter einen wie vorstehend beschriebenen Dekorfilm. Auf diese Weise ist es möglich, das Laminat dekorativ zu gestalten, zum Beispiel mit einem ein- oder mehrfarbigen Muster oder durch ein Druckbild, das andere Beläge, wie zum Beispiel Keramikfliesen, Stein oder Holzparkett optisch nachahmt. Die Auftragung des Druckbildes unterliegt dabei keiner Einschränkung. Dem Fachmann sind derartige Verfahren wohlbekannt. Besonders bevorzugt sind beispielsweise Tiefdruck, Flexodruck und Digitaldruck. Alternativ kann auch das erfindungsgemäß verwendete Oberflächenmaterial des erfindungsgemäßen Laminats auf der Oberfläche, die nicht mit einem Lack versehen ist, mit einem Konterdruck versehen sein, wodurch es vorteilhafterweise möglich ist, auf einen Dekorfilm zu verzichten.

Gemäß einer weiteren Ausführungsform der vorliegenden Erfindung umfasst das Laminat weiter ein zusätzliches abriebfestes Overlay. Gemäß einer bevorzugten Ausführungsform ist das zusätzliche abriebfeste Overlay eine transparente korundhaltige Schicht, der Korund (Aluminiumoxid) zugegeben ist. Die Korundpartikel weisen dabei bevorzugt eine Größe entsprechend der Einteilung It. FEPA-Norm von 180 bis 320 auf, besonders bevorzugt von 220 bis 240. Die Menge des Korunds ist dabei abhängig von der gewünschten vorstehend genannten Abriebklasse. Das zusätzliche abriebfeste Overlay weist vorzugsweise eine Schichtdicke von 30 bis 150 µm, besonders bevorzugt von 50 bis 120 µm auf. Die zusätzliche abriebfeste Overlayschicht erhöht die Abriebfestigkeit des erfindungsgemäßen Laminats, wobei durch die gegebene Transparenz ein Druckbild, beispielsweise auf dem Dekorfilm/-papier, sehr gut sichtbar bleibt.

Gemäß einer weiteren Ausführungsform der vorliegenden Erfindung umfasst das Laminat weiter einen Phenolkern, umfassend einen oder mehrere Phenolfilme, wie vorstehend unter dem Begriff "Phenolfilm" definiert.

Gemäß einer weiteren Ausführungsform der vorliegenden Erfindung umfasst das Laminat weiter einen Melaminfilm, der als Gegenzug wirkt. Ein derartiger Gegenzug befindet sich üblicherweise auf der Unterseite des Laminats als äußerste Schicht und gleicht insbesondere mechanische Spannungen im Schichtverbund aus. Ein Melaminfilm, der als Gegenzug eingesetzt wird, muss keine dekorativen Anforderungen erfüllen. Eingesetzt werden daher vorzugsweise wenig gefüllte, saugfähige Papiere, die sich mit Melaminformaldehydharzen gut imprägnieren lassen. Je nach Anforderung handelt es sich beispielsweise um Papiere mit Grammaturen von 50 g/m² bis 120 g/m², wobei das Papier beispielsweise mit einer Harzmenge von 120 bis 150 Gew.-% des Papiergewichts imprägniert wird. Ebenso können auch als Gegenzug nicht imprägnierte Pergamentpapiere in den Grammaturen 50 g/m² bis 100 g/m² eingesetzt werden.

Die optionale Kombination von Overlay, insbesondere abriebfesten Overlay, Dekorfilm, Phenolkern und/oder Gegenzug, sowie die Reihenfolge dieser optionalen funktionellen Schichten unterliegen im erfindungsgemäßen Laminat keiner besonderen Einschränkung. Je nach gewünschter Verwendung und Beschaffenheit des erfindungsgemäßen Laminats wählt der Fachmann daher eine oder mehrere dieser optionalen Schichten und deren Position im herzustellenden Laminat aus.

Des Weiteren stellt die vorliegende Erfindung ein Verfahren zur Herstellung des erfindungsgemäßen Laminats bereit, umfassend das Verpressen des erfindungsgemäß verwendeten Oberflächenmaterials und des duroplastischen Substrats, wobei das erfindungsgemäß verwendete Oberflächenmaterial mit der Lackschicht nach Außen die oberste Schicht darstellt. Gemäß einer Ausführungsform des erfindungsgemäßen Verfahrens wird weiter ein zusätzliches abriebfestes Overlay, ein Dekorfilm, ein Phenolkern und/oder ein Gegenzug mit dem Oberflächenmaterial und dem duroplastischen Substrat verpresst, wobei das Oberflächenmaterial mit der Lackschicht nach Außen die oberste Schicht darstellt.

Das erfindungsgemäße Verfahren unterliegt dabei keiner besonderen Einschränkung. Das Verpressen wird vorzugsweise bei einem Druck von 20 bar bis zu 100 bar und einer Temperatur von 130 °C bis zu 190 °C durchgeführt, wobei Druck und Temperatur vom Verarbeitungsprozess abhängig sind. Hochdrucklaminate (HPL Schichtstoff, (High Pressure Laminate)) werden vorzugsweise bei Drücken von 80 bar bis 100 bar und Temperaturen von 130 °C bis 150 °C hergestellt, melaminbeschichtete Spanplatten vorzugsweise bei Drücken von 25 bar bis 30 bar und Temperaturen von 170 °C bis 190 °C, und kontinuierlich hergestellte Laminate, sogenannte CPL Schichtstoffe (Continuous Pressure Laminate) werden vorzugsweise bei Drücken von 25 bis 50 bar und Temperaturen von 170 °C und 190 °C hergestellt. Die Aushärtung unter hohem Druck und hoher Temperatur ist ein für den Fachmann bekannter Prozess.

Überraschend weist das erfindungsgemäß verwendete Oberflächenmaterial im erfindungsgemäßen Laminat vorteilhafterweise eine ausgezeichnete Haftung (Adhäsion) zum duroplastischen Substrat auf. Dies zeigt sich beispielsweise durch einen Kochtest nach EN DIN 438-2, der die Ergebnisse für das erfindungsgemäße Laminat mit 5 (sehr gut) bewertet, ebenso auch die chemische Beständigkeit gegenüber Chemikalien wie beispielsweise Natronlauge, Wasserstoffperoxid, Zitronensäure oder Aceton. Zudem zeichnet sich das erfindungsgemäß verwendete Oberflächenmaterial durch eine ausgezeichnete Kratzfestigkeit, hohe Transparenz und Flexibilität aus. Da das erfindungsgemäß verwendete Oberflächenmaterial beim Verpressungsprozess verformbar ist und kein Schmelzen des Oberflächenmaterials bis zu Temperaturen von 220 °C auftritt, findet das erfindungsgemäß verwendete Oberflächenmaterial eine vielseitige Anwendung und kann problemlos beispielsweise in HPL-, CPL, KT- und CDPL-Prozessen verwendet werden, wobei der Fachmann unter KT-Prozess das taktweise Aufpressen von Melaminfilmen auf Span- oder Faserplatten und unter CDPL-Prozess die kontinuierliche Beschichtung von Span- und Faserplatten mit Melaminfilmen versteht. Das erfindungsgemäße Laminat bietet vorteilhafterweise die Möglichkeit, die Vorteile einer Lackierung mit den Vorteilen eines duroplastischen Substrats zu verbinden: So können einerseits beispielsweise die Lacke durch Additive antibakteriell, antistatisch und photokatalytisch ausgestattet sein, und es können Glanzgrade der Lackoberfläche von 3 bis 90, gemessen unter einem Winkel von 60°, beziehungsweise 20° oder 85° nach DIN 67530, erzielt werden. In diesem Zusammenhang sei erwähnt, dass die 20°-Geometrie dann verwendet wird, wenn der Glanzgrad, gemessen unter einem Winkel von 60°, größer als 70 ist, wohingegen die 85°-Geometrie verwendet wird, wenn der Glanzgrad, gemessen bei 60°, kleiner als 10 ist. Andererseits weist das erfindungsgemäße Laminat durch das duroplastische Substrat auch eine vorteilhafte Härte und Steifigkeit auf. Das erfindungsgemäße Laminat kann vorteilhafterweise für eine Vielzahl von Anwendungen verwendet werden, zum Beispiel für Fußböden auf Basis von Holzwerkstoffen, Kunststoffen und Mineraplatten, für kratz- und abriebfeste Fußboden- und Übergangsleisten, Möbel, Türen und für Wand- und Deckenpaneele.

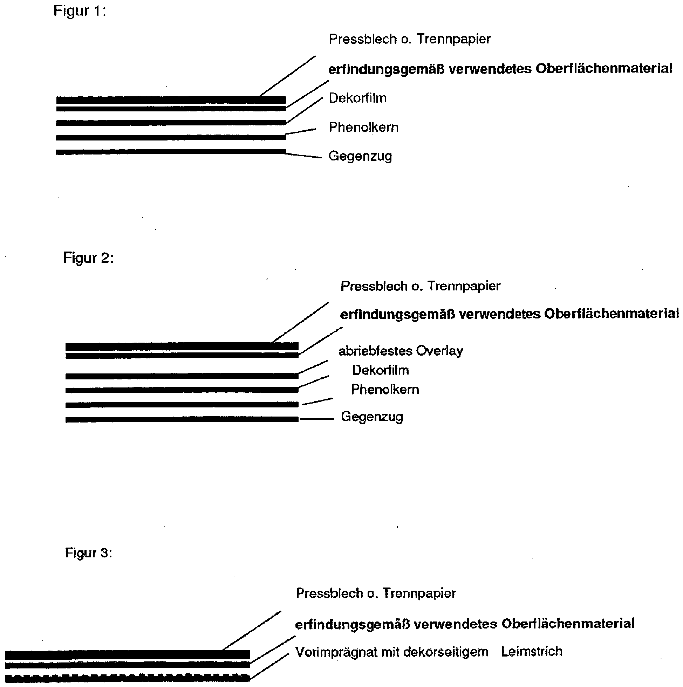

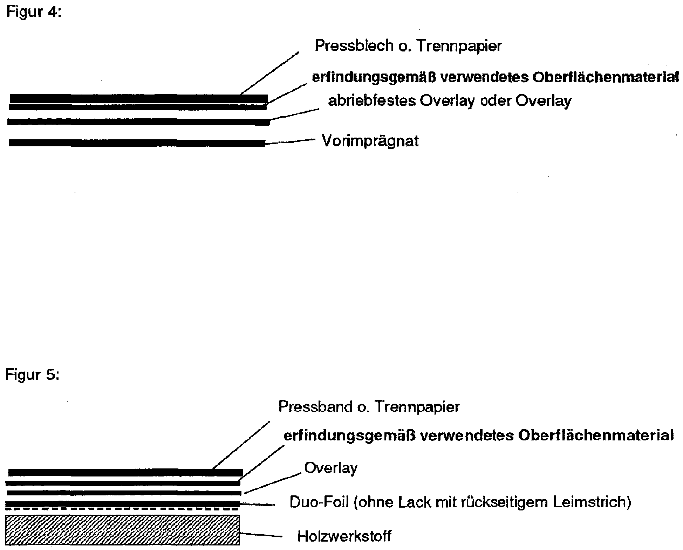

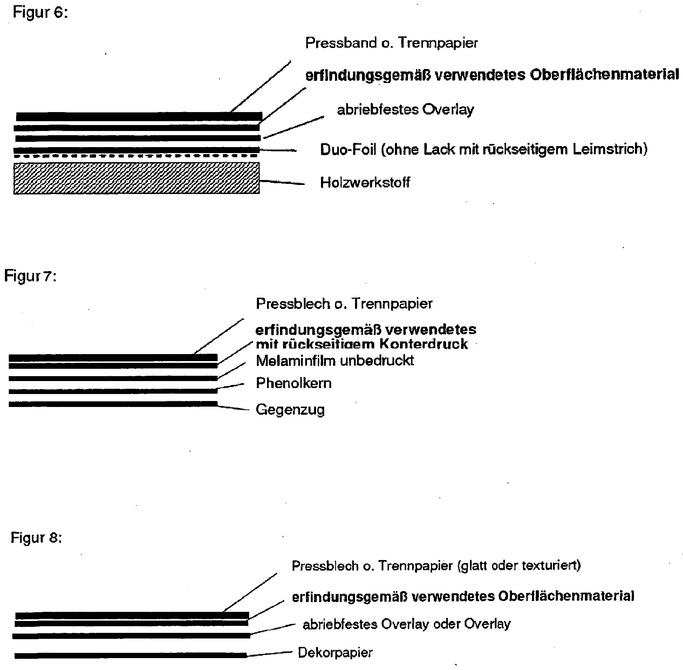

In den Figuren 1 bis 8 ist jeweils beispielhaft der Aufbau eines erfindungsgemäßen Laminats für einen HPL-, CPL- oder KT-Prozess gezeigt. In den in diesen Figuren 1 bis 8 gezeigten Ausführungsformen kann jeweils unter dem erfindungsgemäß verwendeten Oberflächenmaterial auf der Oberfläche, die nicht mit einem Lack versehen ist, eine Siegelschicht auf der Basis von Melaminharz in Kombination mit kolloidaler Kieselsäure angeordnet sein. Dabei versteht es sich, dass die in den Figuren 1 bis 8 gezeigten Ausführungsformen lediglich Beispiele der vorliegenden Erfindung darstellen und somit weder bezüglich der verwendeten Schichten noch deren Reihenfolge für die vorliegende Erfindung einschränkend sind.
Figur 1 zeigt den Aufbau eines Laminats, umfassend das erfindungsgemäß verwendete Oberflächenmaterial.
Figur 2 zeigt den Aufbau eines Laminats, umfassend das erfindungsgemäß verwendete Oberflächenmaterial und ein zusätzliches abriebfestes Overlay.
Figur 3 zeigt den Aufbau eines Dünnlaminats auf einem Vorimprägnat mit dekorseitigem Vorstrich, umfassend das erfindungsgemäß verwendete Oberflächenmaterial.
Figur 4 zeigt den Aufbau eines Dünnlaminats auf einem Vorimprägnat mit dekorseitigem Vorstrich, umfassend das erfindungsgemäß verwendete Oberflächenmaterial und ein zusätzliches abriebfestes Overlay.
Figur 5 zeigt den Aufbau eines Dünnlaminats, umfassend das erfindungsgemäß verwendete Oberflächenmaterial, auf Duo-Foil-Basis zur kontinuierlichen Direktläminierung auf Holzwerkstoffe.
Figur 6 zeigt den Aufbau eines Dünnlaminats, umfassend das erfindungsgemäß verwendete Oberflächenmaterial und ein zusätzliches abriebfestes Overlay, auf Duo-Foil-Basis zur kontinuierlichen Direktlaminierung auf Holzwerkstoffe.
Figur 7 zeigt den Aufbau eines Dünnlaminats, umfassend das erfindungsgemäß verwendete Oberflächenmaterial, wobei das transparente Oberflächenmaterial rückseitig im Konterdruck bedruckt ist.
Figur 8 zeigt den Aufbau eines Dünnlaminats, umfassend das erfindungsgemäß verwendete Oberflächenmaterial und ein Dekorpapier mit einem (abriebfesten) Overlay.

## Patentansprüche

1. Verwendung eines Oberflächenmaterials, umfassend eine Polyethylenterephthalat-Folie, deren beide Oberflächen mit Trichloressigsäure geätzt worden sind, wobei bei der Ätzung zusätzlich gefällte Kieselsäure (SiOₓ) verwendet worden ist, und wobei eine der angeätzten Oberflächen der Polyethylenterephthalat-Folie mit einem Lack versehen ist, und wobei das Oberflächenmaterial auf der Oberfläche, die nicht mit einem Lack versehen ist, mit einer Siegelschicht versehen ist, wobei diese Siegelschicht auf der Basis von Melaminharz in Kombination mit kolloidaler Kieselsäure ist, zur Beschichtung von Melaminharzlaminaten.

2. Verwendung nach Anspruch 1, wobei die Polyethylenterephthalat-Folie biaxial gereckt ist.

3. Verwendung nach Anspruch 1 oder 2, wobei die Dicke der Polyethylenterephthalat-Folie in einem Bereich von 12 µm bis 100 µm liegt.

4. Verwendung nach einem der Ansprüche 1 bis 3, wobei der Lack ein strahlenhärtbarer Lack ist.

5. Verwendung nach einem der Ansprüche 1 bis 4, wobei der Lack auf Basis eines Vollacrylats, eines Urethanacrylats, eines Epoxyacrylats, eines Polyesteracrylats oder eines Polyetheracrylats ist.

6. Verwendung nach einem der Ansprüche 1 bis 5, wobei das Oberflächenmaterial auf der Oberfläche, die nicht mit einem Lack versehen ist, mit einem Konterdruck versehen ist.

7. Laminat, umfassend ein duroplastisches Substrat und ein darauf laminiertes Oberflächenmaterial, wie in einem der Ansprüche 1 bis 6 definiert, wobei das Oberflächenmaterial die äußerste Schicht ist und die lackierte Oberfläche des Oberflächenmaterials vom Substrat weg nach Außen weist.

8. Laminat nach Anspruch 7, wobei das duroplastische Substrat ein Melaminfilm, ein Phenolfilm, eine mit einem duroplastischen Harz beschichtete Platte, ein Vorimprägnat mit einem darüberliegenden Overlay, ein Dekorpapier mit einem darüberliegenden Overlay, oder ein Duo-Foil mit einem darüberliegenden Overlay ist.

9. Laminat nach Anspruch 7 oder 8, wobei das Laminat weiter ein zusätzliches, vorzugsweise abriebfestes, Overlay umfasst.

10. Laminat nach einem der Ansprüche 7 bis 9, wobei das Laminat weiter einen Dekorfilm umfasst.

11. Laminat nach einem der Ansprüche 7 bis 10, wobei das Laminat weiter einen Phenolkern umfasst.

12. Laminat nach einem der Ansprüche 7 bis 11, wobei das Laminat weiter einen Melaminfilm umfasst, der als Gegenzug wirkt.

13. Verfahren zur Herstellung eines Laminats nach einem der Ansprüche 7 bis 12, umfassend das Verpressen eines Oberflächenmaterials, wie in einem der Ansprüche 1 bis 6 definiert, und des duroplastischen Substrats, wobei das erfindungsgemäße Oberflächenmaterial mit der Lackschicht nach Außen die oberste Schicht darstellt.

14. Verfahren nach Anspruch 13, wobei weiter ein zusätzliches abriebfestes Overlay, ein Dekorfilm, ein Phenolkern und/oder ein Gegenzug mit dem Oberflächenmaterial und dem Substrat verpresst werden.

## Claims

1. Use of a surface material comprising a polyethylene terephthalate film whose two surfaces have been etched with trichloroacetic acid, with precipitated silica (SiOₓ) having been used additionally at the etching stage, and one of the etched surfaces of the polyethylene terephthalate film being provided with a varnish, and wherein the surface material is provided with a sealing layer on the surface not provided with a varnish, said sealing layer being based on melamine resin in combination with colloidal silica, for the coating of melamine resin laminates.

2. The use as claimed in claim 1, wherein the polyethylene terephthalate film is biaxially oriented.

3. The use as claimed in claim 1 or 2, wherein the thickness of the polyethylene terephthalate film is in a range from 12 µm to 100 µm.

4. The use as claimed in any of claims 1 to 3, wherein the varnish is a radiation-curable varnish.

5. The use as claimed in any of claims 1 to 4, wherein the varnish is based on an all-acrylate, a urethane acrylate, an epoxy acrylate, a polyester acrylate, or a polyether acrylate.

6. The use as claimed in any of claims 1 to 5, wherein the surface material is provided with a reverse print on the surface not provided with a varnish.

7. A laminate comprising a thermoset substrate and a surface material laminated thereon, as defined in any of claims 1 to 6, the surface material being the outermost layer and the varnished surface of the surface material pointing outward away from the substrate.

8. The laminate as claimed in claim 7, wherein the thermoset substrate is a melamine film, a phenol film, a plate coated with a thermoset resin, a prepreg with an overlying overlay, a decorative paper with an overlying overlay, or a duo-foil with an overlying overlay.

9. The laminate as claimed in claim 7 or 8, further comprising an additional, preferably abrasion-resistant, overlay.

10. The laminate as claimed in any of claims 7 to 9, further comprising a decorative film.

11. The laminate as claimed in any of claims 7 to 10, further comprising a phenolic core.

12. The laminate as claimed in any of claims 8 to 12, further comprising a melamine film which acts as backing.

13. A method for producing a laminate as claimed in any of claims 7 to 12, comprising the compressing of a surface material as defined in any of claims 1 to 6 and of the thermoset substrate, where the surface material with the varnish layer outward constitutes the topmost layer.

14. The method as claimed in claim 13, wherein moreover an additional abrasion-resistant overlay, a decorative film, a phenolic core and/or a backing are compressed with the surface material and the substrate.

## Revendications

1. Utilisation d'un matériau de surface, comprenant une feuille de polyéthylène-téréphtalate, dont les deux surfaces ont été décapées à l'acide trichloro-acétique, dans laquelle lors du décapage, de l'acide silicique précipité (SiOₓ) a été utilisé en outre, et dans laquelle l'une des surfaces décapées de la feuille de polyéthylène-téréphtalate est dotée d'un vernis, et dans laquelle le matériau de surface sur la surface qui n'est pas revêtue d'un vernis, est doté d'une couche de scellement, dans laquelle cette couche de scellement est à base de résine de mélamine en combinaison avec de l'acide silicique colloïdal, pour le revêtement de stratifiés en résine de mélamine.

2. Utilisation selon la revendication 1, dans laquelle la feuille de polyéthylène-téréphtalate est étirée biaxialement.

3. Utilisation selon la revendication 1 ou 2, dans laquelle l'épaisseur de la feuille de polyéthylène-téraphtalate se situe dans une plage de 12 *µ*m à 100 *µ*m.

4. Utilisation selon l'une des revendications 1 à 3, dans laquelle le vernis est un vernis durcissable aux rayons.

5. Utilisation selon l'une des revendications 1 à 4, dans laquelle le vernis est à base d'un acrylate total, d'un acrylate uréthane, d'un acrylate époxy, d'un acrylate de polyester ou d'un polyéther-acrylate.

6. Utilisation selon l'une des revendications 1 à 5, dans laquelle le matériau de surface sur la surface qui n'est pas dotée d'un vernis est doté d'une impression au verso.

7. Stratifié comprenant un substrat thermodurcissable et un matériau de surface stratifié sur celui-ci, tel que défini dans l'une des revendications 1 à 6, dans lequel le matériau de surface est la couche la plus extérieure et la surface vernie du matériau de surface est détournée du substrat en direction de l'extérieur.

8. Stratifié selon la revendication 7, dans lequel le substrat thermodurcissable est un film de mélamine, un film de phénol, une plaque revêtue d'une résine thermodurcissable, un pré-imprégné avec un overlay sur celui-ci, un papier de décoration avec un overlay sur celui-ci ou un film duo avec un overlay sur celui-ci.

9. Stratifié selon la revendication 7 ou 8, dans lequel le stratifié comprend en outre un overlay supplémentaire, de préférence résistant à l'abrasion.

10. Stratifié selon l'une des revendications 7 à 9, dans lequel le stratifié comprend en outre un film de décoration.

11. Stratifié selon l'une des revendications 7 à 10, dans lequel le stratifié comprend en outre un corps de phénol.

12. Stratifié selon l'une des revendications 7 à 11, dans lequel le stratifié comprend en outre un film de mélamine qui fait office de contre-empreinte.

13. Procédé de fabrication d'un stratifié selon l'une des revendications 7 à 12, comprenant la compression d'un matériau de surface tel que défini dans l'une des revendications 1 à 6, et du substrat thermodurcissable, dans lequel le matériau de surface selon l'invention avec la couche de vernis vers l'extérieur représente la couche supérieure.

14. Procédé selon la revendication 13, dans lequel en outre un overlay supplémentaire résistant à l'abrasion, un film de décoration, un corps de phénol et/ou une contre-empreinte sont comprimés avec le matériau de surface et le substrat.
